# EUROPEAN PATENT APPLICATION

(11) **EP 4 685 909 A1**
(43) Date of publication of application: **28.01.2026**
(21) Application number: 23937927.4
(22) Date of filing: 23.05.2023
(51) Int. Cl.: H01M 10/058, H01M 10/04

(54) **ASSEMBLY APPARATUS AND ASSEMBLY METHOD**

(71) Applicant: Contemporary Amperex Technology Co., Limited, Ningde, Fujian 352100 (CN)
(72) Inventor: ZHENG, Zhijian, Ningde, Fujian 352100 (CN); FAN, Xiang, Ningde, Fujian 352100 (CN); MA, Shiwu, Ningde, Fujian 352100 (CN); HONG, Chang, Ningde, Fujian 352100 (CN)
(74) Representative: Lorenz Seidler Gossel Part. mbB
(86) International application number: PCT/CN2023/095895
(87) International publication number: WO 2024/239253

(57) **Abstract**

Embodiments of the present application provide an assembly apparatus and an assembly method. The assembly apparatus is configured to assemble a battery cell. The assembly apparatus includes a first guide rail mechanism, where the first guide rail mechanism is located at a housing entry station, a gap is formed between the first guide rail mechanism and an adjacent second guide rail mechanism; a moving mechanism configured to convey an electrode assembly of the battery cell to the housing entry station; and a pressure measurement mechanism fixedly connected to the first guide rail mechanism, where the pressure measurement mechanism is configured to support weights of the first guide rail mechanism and the moving mechanism located on the first guide rail mechanism, and measure a pressure experienced by the electrode assembly during the process of placing the electrode assembly inside a housing. The assembly apparatus and assembly method of the embodiments of the present application can improve the processing efficiency of battery cells.

## Description

### TECHNICAL FIELD

The present application relates to the field of battery technologies, and in particular, to an assembly apparatus and an assembly method.

### BACKGROUND

With the continuous advancement of battery technologies, various new energy industries utilizing batteries as energy storage devices have developed rapidly. In the development of battery technologies, in addition to improving battery performance, enhancing safety and processing efficiency are also issues that cannot be overlooked.

A battery typically includes multiple battery cells, and the assembly process of a battery cell generally includes the processing and assembly of an electrode assembly, the assembly between the electrode assembly and an end cap, the assembly between the electrode assembly and a housing, and the assembly between the housing and the end cap. During the process of placing the electrode assembly inside the housing, detecting damage to the electrode assembly caused by the housing to improve the installation efficiency of the battery cell is a technical problem that urgently needs to be addressed.

### SUMMARY

Embodiments of the present application provide an assembly apparatus and an assembly method capable of improving the processing efficiency of battery cells.

In a first aspect, an assembly apparatus is provided, and configured to assemble a battery cell. The assembly apparatus includes: a first guide rail mechanism, where the first guide rail mechanism is located at a housing entry station, and a gap is provided between the first guide rail mechanism and an adjacent second guide rail mechanism; a moving mechanism configured to convey an electrode assembly of the battery cell to the housing entry station; and a pressure measurement mechanism fixedly connected to the first guide rail mechanism, where the pressure measurement mechanism is configured to support weights of the first guide rail mechanism and the moving mechanism located on the first guide rail mechanism, and measure a pressure experienced by the electrode assembly during the process of placing the electrode assembly inside a housing.

Therefore, in the assembly apparatus of the embodiments of the present application, since there is a gap between the first guide rail mechanism at the housing entry station and the adjacent second guide rail mechanism, the pressure measurement mechanism can support only the weight of the first guide rail mechanism at the housing entry station and the weight of the moving mechanism located at the housing entry station, without being affected by adjacent stations, resulting in more accurate measurements. Additionally, when measuring the pressure experienced by the electrode assembly, the pressure measurement mechanism can simultaneously support the weights of the first guide rail mechanism and the moving mechanism, eliminating the need to separate the first guide rail mechanism, the moving mechanism, and the pressure measurement mechanism. This can simplify the assembly apparatus and the process of measuring the pressure on the electrode assembly when the electrode assembly enters the housing, thereby improving the processing efficiency of the battery assembly.

In some embodiments, the pressure measurement mechanism includes: a pressure sensor configured to measure the pressure experienced by the electrode assembly during the process of placing the electrode assembly inside the housing; and a fixing component configured to fix the pressure sensor. In this way, the structural strength of the fixing component can be set relatively high to enhance structural stability and reduce its impact on the pressure sensor's measurements.

In some embodiments, the fixing component includes a first mounting portion arranged around the pressure sensor, and the first mounting portion is configured to fix the pressure sensor. This can reduce the impact of the first mounting portion on the measurement region of the pressure sensor, improve structural stability, reduce the tilting likelihood of the pressure sensor, and enhance measurement accuracy.

In some embodiments, the fixing component further includes two second mounting portions arranged oppositely and spaced apart, the two second mounting portions are located on a side of the first mounting portion close to the first guide rail mechanism, a portion of the first guide rail mechanism is disposed between the two second mounting portions, and the two second mounting portions are configured to fix the first guide rail mechanism.

Considering that the weight of the pressure sensor is relatively small while the weight of the first guide rail mechanism is relatively large, fixing the pressure sensor through the first mounting portion of the fixing component and fixing the first guide rail mechanism through the second mounting portions, with the first mounting portion and the second mounting portion arranged in a stacked manner, can enhance the overall structural strength of the fixing component, improve structural stability, and thus improve the measurement accuracy of the pressure sensor.

In some embodiments, the pressure measurement mechanism further includes: a support component located on a side of the pressure sensor away from the first guide rail mechanism, where the support component is configured to support the pressure sensor. The support component is located on a side away from the measurement region of the pressure sensor to support the pressure sensor, so that the pressure sensor is not suspended, ensuring close contact between the measurement region of the pressure sensor and the components it supports above, thereby improving the measurement accuracy of the pressure sensor.

In some embodiments, the support component is fixed to a side of the fixing component away from the first guide rail mechanism. Since the pressure sensor is also disposed on the side of the fixing component away from the first guide rail mechanism, it is convenient for the support component to be close to and support the pressure sensor.

In some embodiments, the fixing component is provided with an opening, and at least a partial region of the support component is located within the opening to support the pressure sensor through the opening. By having at least the part of the fixing component disposed within the opening, at least a partial region of the pressure sensor can also be located within the opening. In this way, the partial region of the support component located within the opening can directly come into contact with the pressure sensor through the opening, thereby better supporting the pressure sensor, ensuring close contact between the measurement region of the pressure sensor and the components it supports above, and improving the measurement accuracy of the pressure sensor.

In some embodiments, the fixing component includes a first mounting portion arranged around the pressure sensor, the first mounting portion is configured to fix the pressure sensor, and the first mounting portion is configured to form the opening, resulting in a simple structure that is easy to implement.

In some embodiments, a side of the moving mechanism away from the first guide rail mechanism is provided with a bearing surface, the electrode assembly is connected to an end cap, one side of the end cap is attached to the bearing surface, and the other side of the end cap is attached to an end face of the electrode assembly. In this way, during the assembly of the battery cell, the electrode assembly can first be fixed to the end cap. During the process of placing the electrode assembly into the housing, the housing can be fitted around the electrode assembly from the side of the electrode assembly away from the end cap, with no need to flip the electrode assembly to allow the end cap to align with the opening of the housing, facilitating the connection between the end cap and the housing, and improving the assembly efficiency of the battery cell.

In some embodiments, the end cap and the electrode assembly are stacked along a first direction on the bearing surface, the moving mechanism clamps the electrode assembly along a second direction, and the second direction is perpendicular to the first direction. This can allow the moving mechanism to clamp the electrode assembly without affecting the orientation of one end face of the electrode assembly toward the bearing surface, so that the electrode assembly can be subjected to a clamping force along the second direction when it is placed on the moving mechanism under its own weight, further ensuring the stability of the electrode assembly on the moving mechanism.

In some embodiments, the assembly apparatus further includes: a driving component, where the driving component is configured to control the moving mechanism to clamp and release the electrode assembly, and the driving component is fixedly connected to the first guide rail mechanism. The driving component can be configured to control the moving mechanism, and since the driving component is fixedly connected to the first guide rail mechanism with no need to move synchronously with the moving mechanism, the structure of the moving mechanism can be simplified, and the moving speed of the moving mechanism can be increased.

In some embodiments, the first guide rail mechanism includes a third mounting portion, the driving component is fixedly connected to the third mounting portion, and the third mounting portion is fixedly connected to the pressure measurement mechanism. Therefore, the pressure measurement component can support the weight of the first guide rail mechanism. Specifically, the pressure measurement component supports the weight of the driving component fixedly connected to the first guide rail mechanism, simplifying the structure of the assembly apparatus and accelerating the assembly efficiency of the battery cell.

In some embodiments, the first guide rail mechanism includes a magnetic drive guide rail. Using the magnetic drive guide rail can allow the moving mechanism to move faster and allow the moving mechanism to move stably during movement, improving the processing efficiency of the battery cell.

In some embodiments, the assembly apparatus further includes: a housing entry mechanism configured to control the housing to move along a first direction so that the electrode assembly enters the housing from an opening of the housing, where the first direction is perpendicular to a surface of the pressure measurement mechanism facing towards the electrode assembly. The housing entry mechanism controls the housing to move along the first direction and gradually approach the electrode assembly, with the opening of the housing facing towards the electrode assembly, allowing the housing to be fitted around the electrode assembly without flipping the electrode assembly, and achieving the housing entry process of the electrode assembly. Additionally, the pressure measurement mechanism can further measure the pressure exerted by the housing on the electrode assembly during the housing entry process to determine whether the housing is misaligned with the electrode assembly or whether the electrode assembly is damaged, offering a simple process that is easy to implement.

In a second aspect, an assembly method is provided, including: conveying an electrode assembly of a battery cell to a housing entry station through a moving mechanism, where the housing entry station is provided with a first guide rail mechanism, and a gap is provided between the first guide rail mechanism and an adjacent second guide rail mechanism; and during the process of placing the electrode assembly inside a housing, measuring a pressure experienced by the electrode assembly through a pressure measurement mechanism fixedly connected to the first guide rail mechanism, where the pressure measurement mechanism is configured to support weights of the first guide rail mechanism and the moving mechanism located on the first guide rail mechanism.

Therefore, in the assembly method of the embodiments of the present application, the moving mechanism conveys the electrode assembly to the housing entry station. For example, the moving mechanism can move along the first guide rail mechanism and the second guide rail mechanism, passing through the first guide rail mechanism at the housing entry station to reach the housing entry station, and then at the housing entry station, the electrode assembly is placed into the housing. Since there is a gap between the first guide rail mechanism and the second guide rail mechanism, the first guide rail mechanism at the housing entry station is relatively independent, allowing the pressure measurement mechanism to support the weight of the first guide rail mechanism of the housing entry station and the weight of the moving mechanism at the housing entry station without being affected by adjacent stations, such as, without being affected by the second guide rail mechanism, and resulting in more accurate measurement results. Additionally, when measuring the pressure experienced by the electrode assembly during its entry into the housing, there is no need to separate the first guide rail mechanism, the moving mechanism, and the pressure measurement mechanism, simplifying the assembly apparatus and the process of measuring the pressure on the electrode assembly when the electrode assembly enters the housing, thereby improving the processing efficiency of the battery assembly and battery cells.

In some embodiments, the method further includes: when the moving mechanism conveys the electrode assembly to the housing entry station but has not placed the electrode assembly inside the housing, resetting a measurement value of the pressure measurement mechanism to zero. When the electrode assembly has not undergone the housing entry operation, the pressure sensor does not measure and its reading is reset to zero. Subsequently, during the process of placing the electrode assembly into the housing, the pressure value measured by the pressure sensor can be equivalent to the pressure exerted by the housing on the electrode assembly, allowing measurement of the pressure on the electrode assembly during the process of placing the housing over the electrode assembly, thereby determining whether the electrode assembly is damaged.

In some embodiments, the method further includes: controlling the housing to move along a first direction through a housing entry mechanism so that the electrode assembly enters the housing from an opening of the housing, where the first direction is perpendicular to a surface of the pressure measurement mechanism facing towards the electrode assembly. The housing entry mechanism controlling the housing to move along the first direction and gradually approach the electrode assembly, with the opening of the housing facing towards the electrode assembly, the housing can be fitted around the electrode assembly without flipping the electrode assembly, achieving the housing entry process of the electrode assembly. Additionally, the pressure measurement mechanism can further measure the pressure exerted by the housing on the electrode assembly during the housing entry process to determine whether the housing is misaligned with the electrode assembly or whether the electrode assembly is damaged, with a simple process that is easy to implement.

### DESCRIPTION OF THE DRAWINGS

FIG. 1 is a partial schematic structural diagram of a system for assembling a battery cell disclosed in an embodiment of the present application;
FIG. 2 is a schematic structural diagram of an assembly apparatus disclosed in an embodiment of the present application;
FIG. 3 is another schematic structural diagram of an assembly apparatus disclosed in an embodiment of the present application;
FIG. 4 is an exploded schematic structural view of an assembly apparatus disclosed in an embodiment of the present application;
FIG. 5 is another exploded schematic structural view of an assembly apparatus disclosed in an embodiment of the present application;
FIG. 6 is an exploded schematic structural view of a battery cell disclosed in an embodiment of the present application;
FIG. 7 is an exploded schematic structural view of a pressure measurement mechanism disclosed in an embodiment of the present application;
FIG. 8 is an exploded schematic structural view of a first guide rail mechanism and a pressure measurement mechanism disclosed in an embodiment of the present application;
FIG. 9 is another exploded schematic structural view of a first guide rail mechanism and a pressure measurement mechanism disclosed in an embodiment of the present application; and
FIG. 10 is a schematic flowchart of an assembly method disclosed in an embodiment of the present application.

In the drawings, the drawings are not drawn to actual scale.

### DETAILED DESCRIPTION

The embodiments of the present application are described in further detail below with reference to the drawings and embodiments. The detailed descriptions and drawings of the following embodiments are used to illustrate the principles of the present application exemplarily but are not intended to limit the scope of the present application, that is, the present application is not limited to the described embodiments.

In the description of the present application, it should be noted that unless otherwise specified, "multiple" means two or more; the terms "upper," "lower," "left," "right," "inner," "outer," and the like indicating orientation or positional relationships are only for the convenience of describing the present application and simplifying the description, and do not indicate or imply that the referred device or element must have a specific orientation, be constructed, and operate in a specific orientation, and therefore should not be construed as limiting the present application. Furthermore, the terms "first," "second," "third," and the like are used for descriptive purposes only and should not be understood as indicating or implying relative importance. "Vertical" is not strictly vertical but within an allowable range of error. "Parallel" is not strictly parallel but within an allowable range of error.

The directional terms appearing in the following description are all directions shown in the drawings and are not intended to limit the specific structure of the present application. In the description of the present application, it should also be noted that unless otherwise expressly specified and limited, the terms "mounted," "connected," and "connection" should be understood in a broad sense. For example, it can be a fixed connection, a detachable connection, or an integral connection. It can be a direct connection or an indirect connection through an intermediate medium. For those skilled in the art, the specific meanings of the above terms in the present application can be understood based on specific circumstances.

In the embodiments of the present application, the same reference numerals denote the same components, and for brevity, detailed descriptions of the same components are omitted in different embodiments. It should be understood that the dimensions such as thickness, length, and width of various components in the embodiments of the present application shown in the drawings, as well as the overall thickness, length, and width of an integrated device, are merely illustrative and should not impose any limitations on the present application.

In the present application, a battery cell may include a lithium-ion secondary battery, a lithium-ion primary battery, a lithium-sulfur battery, a sodium-lithium-ion battery, a sodium-ion battery, or a magnesium-ion battery, and the embodiments of the present application are not limited thereto. The battery cell may be cylindrical, flat, cuboidal, or other shapes, and the embodiments of the present application are not limited thereto. Battery cells are generally classified into three types based on packaging methods: cylindrical battery cells, prismatic battery cells, and pouch battery cells, and the embodiments of the present application are not limited thereto.

The battery mentioned in the embodiments of the present application refers to a single physical module including one or more battery cells to provide higher voltage and capacity. For example, the battery mentioned in the present application may include a battery module or a battery pack. A battery generally includes a box for enclosing one or more battery cells. The box can reduce the impact of liquids or other foreign objects on the charging or discharging of the battery cells.

A battery cell generally includes an electrode assembly. The electrode assembly includes a positive electrode, a negative electrode, and a separator. During the charging and discharging process of the battery cell, active ions (such as lithium ions) intercalate and deintercalate back and forth between the positive electrode and the negative electrode. The separator is disposed between the positive electrode and the negative electrode to prevent short-circuiting between the positive and negative electrodes while allowing active ions to pass through.

The development of battery technology needs to consider multiple design factors simultaneously, such as energy density, cycle life, discharge capacity, charge-discharge rate, and other performance parameters. Additionally, the processing efficiency and yield rate of batteries need to be considered. For example, improving the processing efficiency of battery cells can enhance the processing efficiency of batteries.

The production process of battery cells is highly complex, typically including the processing and assembly of electrode assemblies, the assembly between the electrode assemblies and end caps, the assembly between the electrode assemblies and housings, and the assembly between the housings and the end caps. Therefore, the production efficiency of battery cells significantly restricts the production efficiency of batteries. Moreover, if the manufacturing process of battery cells is imperfect, it may lead to a reduced yield rate during production of battery cells or cause defects in certain aspects of battery cells, resulting in performance issues that could severely affect the service life of battery cells and, consequently, the performance of batteries. Therefore, effectively improving the production efficiency and yield rate of battery cells is one of the important issues in the battery field.

For example, during the assembly of a battery cell, the housing needs to be fitted around the exterior of the electrode assembly. If there is a position misalignment between the housing and the electrode assembly during this process, the housing may damage the electrode assembly, thereby affecting the performance of the electrode assembly and consequently impacting the processing yield and performance of the battery cell and the battery. Therefore, during the process of fitting the housing around the electrode assembly, the pressure experienced by the electrode assembly can be measured to determine whether the housing damages the electrode assembly. However, how to dispose a pressure measurement apparatus to simply and quickly measure the pressure experienced by the electrode assembly without affecting the entry of the electrode assembly into the housing is an urgent issue to be addressed.

Therefore, the embodiments of the present application provide an assembly apparatus and an assembly method capable of addressing the above issues. The assembly apparatus of the embodiments of the present application includes a first guide rail mechanism, a moving mechanism, and a pressure measurement mechanism. The first guide rail mechanism is located at a housing entry station and has a gap between it and an adjacent second guide rail mechanism, where the second guide rail mechanism may be a guide rail mechanism located at other stations. The moving mechanism can convey an electrode assembly of a battery cell to be assembled to the housing entry station. The pressure measurement mechanism is fixedly connected to the first guide rail mechanism and the pressure measurement mechanism can support both the weights of the first guide rail mechanism and the moving mechanism located on the first guide rail mechanism, and measure a pressure experienced by the electrode assembly during the process of placing the electrode assembly inside a housing. Since there is a gap between the first guide rail mechanism at the housing entry station and the adjacent second guide rail mechanism, the pressure measurement mechanism can support only the weights of the first guide rail mechanism of the housing entry station and the moving mechanism at the housing entry station, without being affected by adjacent stations, resulting in more accurate measurements. Additionally, when the pressure measurement mechanism measures the pressure experienced by the electrode assembly, it can support both the weights of the first guide rail mechanism and the moving mechanism, eliminating the need to separate the first guide rail mechanism, the moving mechanism, and the pressure measurement mechanism. This can simplify the assembly apparatus and the process of measuring the pressure on the electrode assembly when the electrode assembly enters the housing, thereby improving the processing efficiency of the battery assembly.

The technical solutions described in the embodiments of the present application can be used in the processing and assembly process of battery cells, where multiple battery cells can be used to assemble a battery, and the battery is suitable for various electrical devices using batteries.

Electrical devices can include vehicles, mobile phones, portable devices, laptops, ships, spacecraft, electric toys, and electric tools, among others. Vehicles can be fuel vehicles, gas vehicles, or new energy vehicles, where new energy vehicles can be pure electric vehicles, hybrid vehicles, or extended-range vehicles. Spacecraft include airplanes, rockets, space shuttles, and spaceships, among others. Electric toys include fixed or mobile electric toys, such as game consoles, electric car toys, electric ship toys, and electric airplane toys. Electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers. The embodiments of the present application do not impose specific restrictions on the above electrical devices.

To meet different power usage demands, a battery may include multiple battery cells, where the multiple battery cells can be connected in series, in parallel, or in a combination of series and parallel, with the combination referring to a mix of series and parallel connections. A battery may also be referred to as a battery pack. Optionally, multiple battery cells can first be connected in series, in parallel, or in a combination to form a battery module, and multiple battery modules can then be connected in series, in parallel, or in a combination to form a battery. In other words, multiple battery cells can directly form a battery, or they can first form battery modules, which are then assembled into a battery.

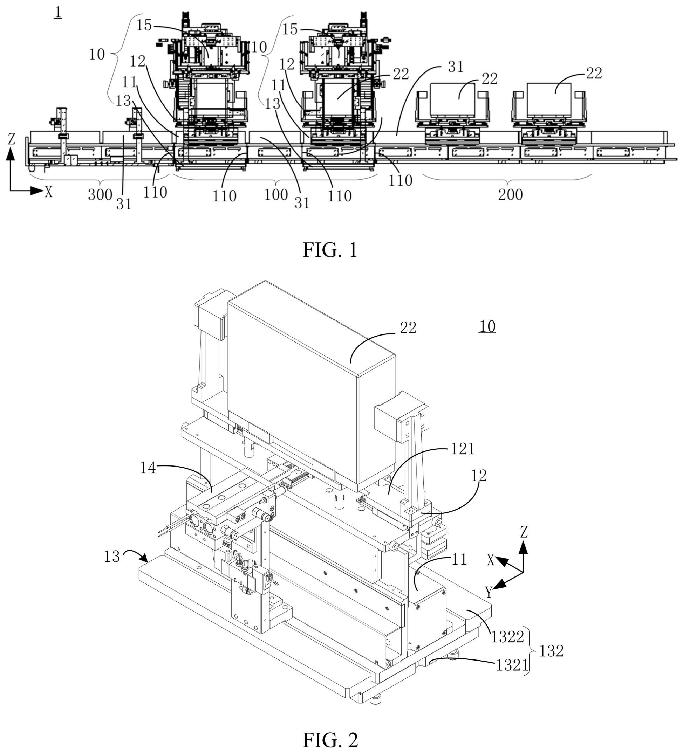

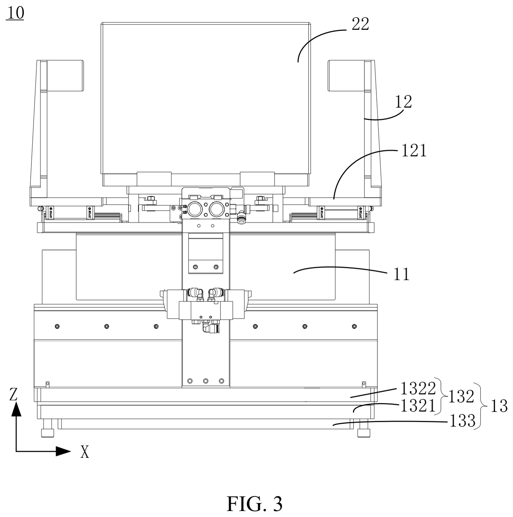

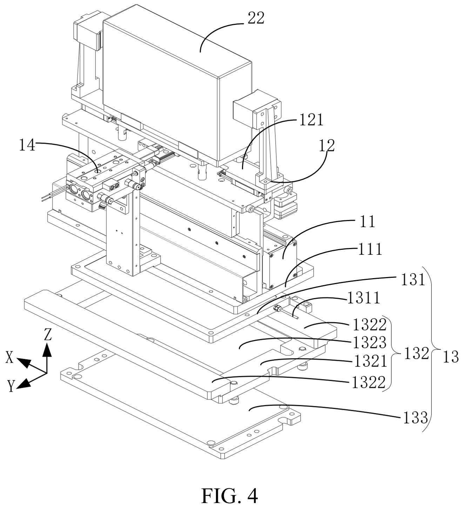

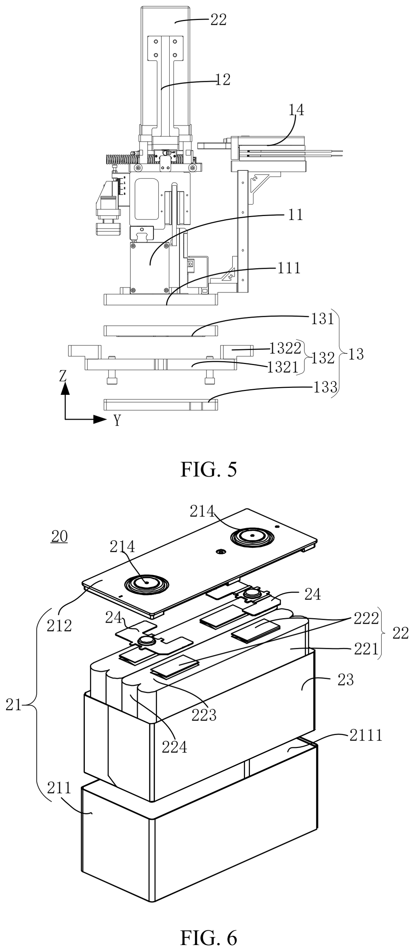

FIG. 1 shows a partial schematic diagram of a system 1 for assembling battery cells according to an embodiment of the present application. FIG. 2 and FIG. 3 show schematic structural diagrams of an assembly apparatus 10 from different angles according to an embodiment of the present application. FIG. 4 and FIG. 5 show exploded schematic structural views of an assembly apparatus 10 from different angles according to an embodiment of the present application. For example, FIG. 4 and FIG. 5 may be exploded schematic structural views of the assembly apparatus 10 shown in FIG. 2 and FIG. 3.

As shown in FIG. 1 to FIG. 5, the assembly apparatus 10 of the embodiments of the present application is configured to assemble a battery cell and specifically may include: a first guide rail mechanism 11, where the first guide rail mechanism 11 is located at a housing entry station 100, and a gap 110 is formed between the first guide rail mechanism 11 and an adjacent second guide rail mechanism 31; a moving mechanism 12 configured to convey an electrode assembly 22 of the battery cell to the housing entry station 100; and a pressure measurement mechanism 13 fixedly connected to the first guide rail mechanism 11, where the pressure measurement mechanism 13 is configured to support weights of the first guide rail mechanism 11 and the moving mechanism 12 located on the first guide rail mechanism 11, and measure a pressure experienced by the electrode assembly 22 during the process of placing the electrode assembly 22 inside a housing 211.

It should be understood that the assembly apparatus 10 of the embodiments of the present application can be used in the system 1. The system 1 can be configured to assemble battery cells. The system 1 may include multiple stations, and the multiple stations may include at least one housing entry station 100. For example, FIG. 1 shows an example with two housing entry stations 100, and the two housing entry stations 100 can be configured to perform the entry of two electrode assemblies 22 into housings, respectively, to improve efficiency during batch assembly of battery cells.

In some embodiments, the system 1 may also include other stations for processing and assembling battery cells. For example, the system 1 may include a detection station 200 adjacent to the housing entry station 100 for detecting the status during the assembly process of the battery cell. Similar to having one or more housing entry stations 100 in the system 1, correspondingly, the system 1 may also have at least one detection station 200. For example, FIG. 1 shows an example with two detection stations 200 to improve efficiency during batch assembly of battery cells. Specifically, before the housing entry station 100, the electrode assembly 22 typically needs to undergo processing. For example, the electrode assembly 22 may need to be treated with film wrapping. The detection station 200 can be used to detect the status of the electrode assembly 22 to determine the wrapping effect, but the embodiments of the present application are not limited thereto.

In some embodiments, the system 1 may also include an unloading station 300 adjacent to the housing entry station 100. At the unloading station 300, the electrode assembly 22 with the housing 211 is separated from the moving mechanism 12 for subsequent processing of the electrode assembly 22 with the housing 211. Specifically, the moving mechanism 12 of the embodiments of the present application can continue to convey the electrode assembly 22 with the housing 211 from the housing entry station 100 to the unloading station 300. At the unloading station 300, the electrode assembly 22 with the housing 211 can be separated from the moving mechanism 12, and the moving mechanism 12 can be reused to fix and convey other electrode assemblies 22, while the separated electrode assembly 22 with the housing 211 can proceed to subsequent assembly steps to obtain the assembled battery cell. Additionally, the system 1 may have at least one unloading station 300, for example, FIG. 1 shows an example with two unloading stations 300 to improve efficiency during batch assembly of battery cells.

In the embodiments of the present application, the assembly apparatus 10 includes a first guide rail mechanism 11, and the first guide rail mechanism 11 is located at the housing entry station 100, with a gap 110 between it and an adjacent second guide rail mechanism 31. The second guide rail mechanism 31 may be any guide rail mechanism adjacent to the first guide rail mechanism 11. The second guide rail mechanism 31 may include a guide rail mechanism located at other stations or the second guide rail mechanism 31 may include a guide rail mechanism located between the housing entry station 100 and another station. Since there is a gap 110 between the first guide rail mechanism 11 and the second guide rail mechanism 31, that is, the first guide rail mechanism 11 at the housing entry station 100 is relatively independent, the pressure measurement mechanism 13 supports the weight of the first guide rail mechanism 11 of the housing entry station 100 and the weight of the moving mechanism 12 located at the housing entry station 100 without being affected by adjacent stations, such as without being affected by an adjacent second guide rail mechanism 31, resulting in more accurate measurement results.

The moving mechanism 12 conveys the electrode assembly 22 to the housing entry station 100. For example, the moving mechanism 12 can move along the first guide rail mechanism 11 and the second guide rail mechanism 31, passing through the first guide rail mechanism 11 at the housing entry station 100 to reach the housing entry station 100, and then at the housing entry station 100, the electrode assembly 22 is placed into the housing 211. The pressure measurement mechanism 13 of the assembly apparatus 10 can support both the weights of the first guide rail mechanism 11 and the moving mechanism 12, so that in measuring the pressure experienced by the electrode assembly 22 when it enters the housing 211, there is no need to separate the first guide rail mechanism 11, the moving mechanism 12, and the pressure measurement mechanism 13. This can simplify the assembly apparatus 10 and the process of measuring the pressure on the electrode assembly 22 when the electrode assembly enters the housing 211, thereby improving the processing efficiency of the battery assembly 22 and the battery cell.

It should be understood that placing the electrode assembly 22 inside the housing 211 in the embodiments of the present application may include any of the following scenarios: fixing the electrode assembly 22 and controlling the housing 211 to move toward the electrode assembly 22 to fit the housing around the electrode assembly 22; or fixing the housing 211 and controlling the electrode assembly 22 to move toward the housing 211 to install the electrode assembly 22 inside the housing 211; or controlling both the electrode assembly 22 to move toward the housing 211 and the housing 211 to move toward the electrode assembly 22, with both moving together to place the electrode assembly 22 inside the housing 211. For ease of explanation, the embodiments of the present application mainly describe the scenario where the electrode assembly 22 is fixed, and the housing 211 is controlled to move toward the electrode assembly 22 to fit the housing 211 around the electrode assembly 22, but the embodiments of the present application are not limited thereto.

In some embodiments, the assembly apparatus 10 further includes: a housing entry mechanism 15 configured to control the housing 211 to move along a first direction so that the electrode assembly 22 enters the housing 211 from an opening 2111 of the housing 211, where the first direction is perpendicular to a surface of the pressure measurement mechanism 13 facing towards the electrode assembly 22. Specifically, the housing entry mechanism 15 can orient the opening 2111 of the housing 211 toward the electrode assembly 22 and control the housing 211 to move along the first direction so that the electrode assembly 22 enters the housing 211 from the opening 2111, where the first direction is perpendicular to the surface of the pressure measurement mechanism 13 facing towards the electrode assembly 22. For example, the present application takes the first direction as the height direction Z of the assembly apparatus 10 as an example, and further, the first direction may be the gravitational direction of the electrode assembly 22. The housing 211 has an opening 2111, and the electrode assembly 22 can be disposed on the moving mechanism 12 along the first direction. The housing entry mechanism 15 controls the housing 211 to move along the first direction Z and gradually approach the electrode assembly 22, with the opening 2111 of the housing 211 facing towards the electrode assembly 22, allowing the housing 211 to be fitted around the electrode assembly 22 without flipping the electrode assembly 22, and achieving the housing entry process of the electrode assembly 22. Additionally, the pressure measurement mechanism 13 can further measure the pressure exerted by the housing 211 on the electrode assembly 22 during the housing entry process to determine whether the housing 211 is misaligned with the electrode assembly 22 or whether the electrode assembly 22 is damaged, offering a simple process that is easy to implement.

The structure of the housing entry mechanism 15 in the embodiments of the present application can be configured based on practical applications. For example, the housing entry mechanism 15 may include: a bracket, a driving portion, and a housing fixing component, where the housing fixing component is fixed on the bracket, and the driving portion may also be fixed on the bracket to facilitate the processing and assembly of the housing entry mechanism 15. Specifically, the housing fixing component can be used to fix the housing 211 so that the opening 2111 of the housing 211 can be aligned with the electrode assembly 22, facilitating accurate fitting of the housing 211 around the electrode assembly 22 to complete the housing entry process of the electrode assembly 22.

It should be understood that the assembly apparatus 10 of the embodiments of the present application can be used to assemble a battery cell, and the structure of the battery cell can be flexibly configured based on practical applications. For example, FIG. 6 shows a possible exploded schematic structural view of a battery cell 200 according to an embodiment of the present application, and the structure of the battery cell 20 is described below using FIG. 6 as an example. As shown in FIG. 6, the battery cell 20 may include one or more electrode assemblies 22 and a casing 21 for accommodating the electrode assembly 22.

It should be understood that as shown in FIG. 6, the casing 21 in the embodiments of the present application may be a polyhedral structure. Specifically, the casing 21 may include the housing 211 and an end cap 212. The housing 211 may be a hollow structure with an opening 2111 formed at at least one end, and the shape of the end cap 212 may be adapted to the shape of the housing 211. The end cap 212 is configured to cover the opening 2111 of the housing 211, so that the casing 21 separates the internal environment of the battery cell 20 from the external environment. If the housing 211 is a hollow structure with an opening 2111 formed at one end, one end cap 212 may be provided, as shown in FIG. 6. Differently, if the housing 211 is a hollow structure with openings 2111 formed at two ends, two end caps 212 may be provided, and the two end caps 212 cover the openings 2111 at the two ends of the housing 211 respectively.

The material of the housing 211 in the embodiments of the present application can be various, such as copper, iron, aluminum, steel, aluminum alloy, etc. The material of the end cap 212 can also be various, such as copper, iron, aluminum, steel, aluminum alloy, etc., and the material of the end cap 212 may be the same as or different from that of the housing 211.

The casing 21 in the embodiments of the present application can have various shapes, such as cylindrical or cuboidal. The shapes of the housing 211 and the end cap 212 are matched, for example, as shown in FIG. 6, the housing 211 may be a cuboidal structure, and the end cap 212 may be a rectangular plate structure adapted to the housing 211.

For ease of explanation, the present application takes the casing 21 as a cuboid as an example. Specifically, as shown in FIG. 6, the casing 21 includes: a housing 211, where the housing 211 is a hollow structure with an opening at one end; and an end cap 212, where the end cap 212 is configured to cover the opening 2111 of the housing 211 to form a closed cavity for accommodating the electrode assembly 22.

In the battery cell 20, the housing 211 is used to accommodate the electrode assembly 22, and depending on practical requirements, one or more electrode assemblies 22 may be disposed within the housing 211. For example, FIG. 6 shows an example with four electrode assemblies 22 arranged along the thickness direction of the electrode assembly 22 in the battery cell 20, but the embodiments of the present application are not limited thereto.

The electrode assembly 22 in the embodiments of the present application is the component in the battery cell 20 where electrochemical reactions occur. The electrode assembly 22 may be cylindrical, cuboidal, or other shapes. If the electrode assembly 22 is a cylindrical structure, the housing 211 may also be a cylindrical structure; if the electrode assembly 22 is a cuboidal structure, the housing 211 may also be a cuboidal structure.

For any electrode assembly 22, the electrode assembly 22 may include tabs 222 and a main body 221. Specifically, as shown in FIG. 6, the electrode assembly 22 may include at least two tabs 222, and the at least two tabs 222 may include at least one cathode tab and at least one anode tab. The cathode tab may be formed by stacking portions of the cathode plate not coated with a cathode active material layer, and the anode tab may be formed by stacking portions of the anode plate not coated with a negative active material layer.

The casing 21 in the embodiments of the present application is also provided with electrode terminals 214, and the electrode terminals 214 are configured to electrically connect with the electrode assembly 22 to output the electrical energy of the battery cell 20. As shown in FIG. 6, the battery cell 20 may further include at least two electrode terminals 214, and the at least two electrode terminals 214 may be disposed on the same wall or different walls of the battery cell 20. For example, FIG. 6 shows an example where the battery cell 20 includes two electrode terminals 214, and both the two electrode terminals 214 are disposed on the end cap 212. The end cap 212 is typically flat, with the two electrode terminals 214 fixed on the flat surface of the end cap 212. The two electrode terminals 214 are a cathode terminal and a negative electrode terminal respectively. Each electrode terminal 214 corresponds to one connecting member 24, and the connecting member 24 is located between the end cap 212 and the electrode assembly 22 to electrically connect the electrode assembly 22 and the electrode terminal 214. Specifically, as shown in FIG. 6, the cathode tab of the electrode assembly 22 can be connected to the cathode terminal through one connecting member 24, and the anode tab of the electrode assembly 22 can be connected to the negative electrode terminal through the other connecting member 24.

Optionally, the casing 21 of the battery cell 20 in the embodiments of the present application may further be provided with other components. For example, the battery cell 200 may include a pressure relief mechanism to actuate when the internal temperature and/or pressure of the battery cell 20 reaches a threshold to release the internal temperature and/or pressure of the battery cell 20.

It should be understood that the battery cell 20 in the embodiments of the present application further includes an insulating layer 23, and the insulating layer 23 is a hollow structure with at least one opening. For example, as shown in FIG. 6, the present application mainly takes the insulating layer 23 with one opening as an example, and the opening of the insulating layer 23 faces towards the end cap 212. The insulating layer 23 is disposed between the housing 211 and the electrode assembly 22. The hollow structure of the insulating layer 23 is configured to accommodate the electrode assembly 22, so that the insulating layer 23 wraps at least a partial region of the outer surface of the electrode assembly 22. The insulating layer 23 can be configured to maintain electrical insulation between the electrode assembly 22 and the inner wall of the housing 211. For example, the insulating layer 23 may be a film-shaped cover made of insulating material to cover at least a portion of the outer periphery of the electrode assembly 22. Specifically, before wrapping the electrode assembly 22, the insulating layer 23 may be a sheet-like structure, forming a hollow open structure wrapped around the electrode assembly 22 through the action of a wrapping mechanism 20.

In the embodiments of the present application, the shape of the insulating layer 23 can be determined based on the shape of the electrode assembly 22 or the housing 211. For example, the insulating layer 23 being a cuboid is used as an example in the embodiments of the present application, but the embodiments of the present application are not limited thereto.

It should be understood that the moving mechanism 12 in the embodiments of the present application conveys the electrode assembly 22 to the housing entry station 100 to complete the housing entry operation at the housing entry station. Considering the structure of the battery cell 20, the electrode assembly 22 conveyed by the moving mechanism 12 may be connected or provided with other structures.

For example, the moving mechanism 12 in the embodiments of the present application conveys the electrode assembly 22 to the housing entry station 100, where the electrode assembly 22 may be an electrode assembly 22 including the insulating layer 23.

In some embodiments, the system 1 may include a wrapping station for wrapping the insulating layer 23 around the outer surface of the electrode assembly 22. To fix the insulating layer 23 and the electrode assembly 22, the insulating layer 23 may undergo heat sealing, and the electrode assembly 22 wrapped with the insulating layer 23 may undergo adhesive application. The moving mechanism 12 conveys the electrode assembly 22 wrapped with the insulating layer 23 to the detection station 200 to inspect the wrapping effect of the insulating layer 23 on the electrode assembly 22. For example, at the detection station 200, a detection mechanism can perform defect inspection on the electrode assembly 22 wrapped with the insulating layer 23 to promptly identify and address defective areas, such as areas with unqualified adhesive application, to avoid affecting the performance of the assembled battery cell 20. The detection mechanism in the embodiments of the present application may be a charge coupled device (charge coupled device, CCD) detection mechanism, using a CCD camera for photography and defect detection, but the embodiments of the present application are not limited thereto. Subsequently, the moving mechanism 12 conveys the electrode assembly 22 wrapped with the insulating layer 23 from the detection station 200 to other stations, such as continuing to the housing entry station 100 to complete the housing entry operation.

In the embodiments of the present application, the moving mechanism 12 can also be used to fix and convey the electrode assembly 22 and the end cap 212 connected to the electrode assembly 22. During the assembly of the battery cell 20, the electrode assembly 22 can first be fixed to the end cap 212. For example, the electrode terminals 214 of the end cap 212 can be connected to the corresponding tabs 222 through the connecting members 24, so that the end cap 212 is relatively fixed to the electrode assembly 22, meaning that the end cap 212 and the electrode assembly 22 can be conveyed together to the housing entry station 100 for subsequent processing. Therefore, the moving mechanism 12 can be used to fix and convey the electrode assembly 22 connected with the end cap 212, facilitating subsequent processing steps and improving the processing efficiency of the battery cell 20.

It should be understood that the relative position of the electrode assembly 22 and the end cap 212 in the embodiments of the present application can be flexibly configured based on practical applications. For example, a side of the moving mechanism 12 away from the first guide rail mechanism 11 is provided with a bearing surface 121, the electrode assembly 22 is connected to the end cap 212, one side of the end cap 212 is attached to the bearing surface 121, and the other side of the end cap 212 is attached to an end face of the electrode assembly 22. That is, the end cap 212 is placed between the bearing surface 121 and the electrode assembly 22. In this way, during the process of placing the electrode assembly 22 into the housing 211, the housing 211 can be fitted around the electrode assembly 22 from the side of the electrode assembly 22 away from the end cap 212, with no need to flip the electrode assembly 22 to allow the end cap 212 to align with the opening 2111 of the housing 211, facilitating the connection between the end cap 212 and the housing 211, and improving the assembly efficiency of the battery cell 20.

In the embodiments of the present application, the moving mechanism 12 includes a bearing surface 121 for supporting the electrode assembly 22, with a first end face 223 of the electrode assembly 22 facing towards the bearing surface 121, so that the electrode assembly 22 is placed on the moving mechanism 12 along a first direction, where the first direction is perpendicular to the first end face 223, and the first direction may be the gravitational direction of the electrode assembly 22. On one hand, considering that when wrapping the insulating layer 23, the insulating layer 23 typically does not need to wrap the entire surface of the electrode assembly 22. For example, the insulating layer 23 may not need to wrap the first end face 223 of the electrode assembly 22, so when the moving mechanism 12 conveys the electrode assembly 22, the first end face 223, which does not need to be wrapped with the insulating layer 23, faces towards the bearing surface 121. This does not affect the wrapping process of the insulating layer 23, thus avoiding the need to flip the electrode assembly 22 during wrapping of the insulating layer 23, so as to prevent damage to the electrode assembly 22. On the other hand, with the first end face 223 facing towards the bearing surface 121 and the electrode assembly 22 disposed on the moving mechanism 12 along the first direction, the electrode assembly 22 can be placed on the moving mechanism 12 using its own gravity, facilitating setup and improving the stability of the electrode assembly 22 on the moving mechanism 12.

Optionally, the first end face 223 in the embodiments of the present application may be any surface of the electrode assembly 22 that does not need to be wrapped with the insulating layer 23. For example, the first end face 223 may be the end face of the electrode assembly 22 provided with the tabs 222, or the tabs 222 may be provided on other end faces, and the embodiments of the present application are not limited thereto.

It should be understood that the bearing surface 121 in the embodiments of the present application is a surface of the moving mechanism 12, where the surface may be a flat surface to facilitate the processing of the moving mechanism 12; alternatively, the bearing surface 121 may also be a non-flat surface, for example, the shape of the bearing surface 121 may be configured based on the shape of the components in contact with it. For example, the bearing surface 121 contacts the surface of the end cap 212, and considering that the surface of the end cap 212 away from the electrode assembly 22 may have protruding or recessed parts, the surface of the end cap 212 away from the electrode assembly 22 is typically non-flat, and correspondingly, the bearing surface 121 may also be non-flat to adapt to the surface of the end cap 212 away from the electrode assembly 22. For example, the end cap 212 is provided with electrode terminals 214, and the electrode terminals 214 protrude from the surface of the end cap 212 away from the electrode assembly 22. Correspondingly, the bearing surface 121 may be provided with a recessed area to accommodate the electrode terminals 214, allowing the surface of the end cap 212 to adapt to the bearing surface 121. On one hand, the correspondence between the protruding parts and the recessed areas can achieve positioning, facilitating accurate placement of the end cap 212 and the electrode assembly 22 on the bearing surface 121, and enabling the end cap 212 to be more stably positioned on the bearing surface 121, improving the convey stability of the moving mechanism 12; on the other hand, it can also reduce wear on the surface of the end cap 212 by the bearing surface 121, improving the yield rate of the battery cell 20.

In some embodiments, the end cap 212 and the electrode assembly 22 are stacked along a first direction on the bearing surface 121, the moving mechanism 12 clamps the electrode assembly 22 along a second direction, and the second direction is perpendicular to the first direction. The first direction is perpendicular to the bearing surface 121, and the first direction being the height direction Z of the assembly apparatus 10 is used as an example herein. When the first direction Z is perpendicular to the first end face 223, if the second direction is perpendicular to the first direction Z, the second direction is parallel to the first end face 223. For example, the present application takes the second direction as the length direction X of the assembly apparatus 10 as an example, where the length direction X is the moving direction of the moving mechanism 12, and the moving mechanism 12 clamps the electrode assembly 22 along the second direction X. It means that the moving mechanism 12 can clamp two oppositely disposed second end faces 224 of the electrode assembly 22, where the second end faces 224 intersect with the first end face 223. This can allow the moving mechanism 12 to clamp the electrode assembly 22 without affecting the orientation of the first end face 223 of the electrode assembly 22 toward the bearing surface 121, so that the electrode assembly 22 can be subjected to a clamping force along the second direction when it is placed on the moving mechanism 12 under its own gravity, further ensuring the stability of the electrode assembly 22 on the moving mechanism 12.

It should be understood that when conveying the electrode assembly 22 to the housing entry station 100, the moving mechanism 12 can also support other structures connected to the electrode assembly 22, which are not detailed herein. Additionally, the weight supported by the pressure measurement mechanism 13 for the moving mechanism 12 may include the total weight of the electrode assembly 22 conveyed by the moving mechanism 12 and other components connected to the electrode assembly 22 that are supported by the pressure measurement mechanism 13. The pressure measurement mechanism 13 of the embodiments of the present application is described in detail below with reference to the drawings.

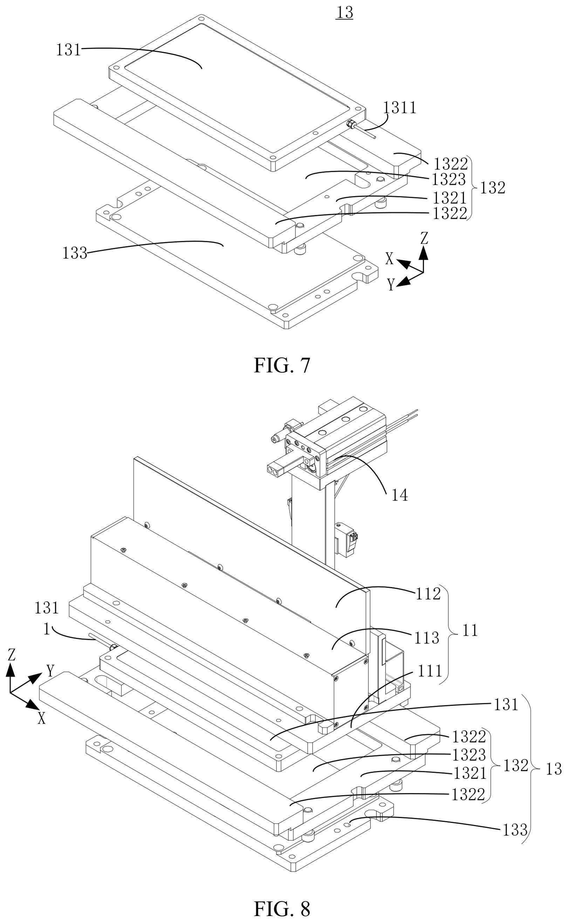

FIG. 7 shows an exploded schematic structural view of the pressure measurement mechanism 13 according to an embodiment of the present application, where the pressure measurement mechanism 13 shown in FIG. 7 may be the pressure measurement mechanism 13 included in the assembly apparatus 10 shown in FIG. 1 to FIG. 6. As shown in FIG. 7, the pressure measurement mechanism 13 includes: a pressure sensor 131 configured to measure a pressure experienced by the electrode assembly 22 during the process of placing the electrode assembly 22 inside the housing 211; and a fixing component 132 configured to fix the pressure sensor 131. The pressure measurement mechanism 13 measures the pressure experienced by the electrode assembly 22 through the pressure sensor 131 and fixes the pressure sensor 131 through the fixing component 132, so the structural strength of the fixing component 132 can be set relatively high to enhance structural stability and reduce its impact on the measurements of the pressure sensor 131.

Specifically, the pressure sensor 131 can be specifically used to: reset the measurement value of the pressure measurement mechanism 13 to zero when the moving mechanism 12 conveys the electrode assembly 22 to the housing entry station 100 and the electrode assembly 22 has not been placed inside the housing 211, meaning that when the electrode assembly 22 has not undergone the housing entry operation, the pressure sensor 131 does not measure and its reading is reset to zero; subsequently, during the process of placing the electrode assembly 22 into the housing 211, the pressure value measured by the pressure sensor 131 can be equivalent to the pressure exerted by the housing 211 on the electrode assembly 22.

For example, if there is no misalignment between the housing 211 and the electrode assembly 22, meaning the electrode assembly 22 can be placed into the housing 211 according to preset processing requirements, the measurement value of the pressure sensor 131 should be within a preset range; conversely, if the electrode assembly 22 fails to be placed into the housing 211 according to preset processing requirements, such as a misalignment between the housing 211 and the electrode assembly 22, it may lead to an increased pressure value on a certain area of the electrode assembly 22 by the housing 211, causing the measurement value of the pressure sensor 131 to exceed the preset range. By reading the measurement results of the pressure sensor 131, errors during the housing entry process of the electrode assembly 22 can be promptly identified, reducing defective battery cells 20 and improving the processing efficiency of the battery cell 20.

In the embodiments of the present application, the shape and size of the pressure sensor 131 can be flexibly configured based on practical applications. For example, as shown in FIG. 7, the pressure sensor 131 in the embodiments of the present application may be a plate-like structure to facilitate installation and measurement, but the embodiments of the present application are not limited thereto.

In some embodiments, the pressure measurement mechanism 13 in the embodiments of the present application may further include a transmission interface 1311, and the transmission interface 1311 is configured to transmit the measurement results of the pressure measurement mechanism 13. For example, the pressure measurement results can be transmitted to other devices through the transmission interface 1311 for timely monitoring and adjustment of the housing entry process of the electrode assembly 22. Specifically, the pressure sensor 131 may include the transmission interface 1311, and the transmission interface 1311 can further be configured to control the pressure sensor 131. Specifically, the transmission interface 1311 can be configured to connect to a control component to control the pressure sensor 131 through the transmission interface 1311. For example, the pressure sensor 131 can be reset to zero through the transmission interface 1311. For another example, the measurement data of the pressure sensor 131 can be read through the transmission interface 1311 and the pressure measurement data is transmitted for timely analysis and processing.

In the embodiments of the present application, the fixing component 132 includes a first mounting portion 1321 arranged around the pressure sensor 131, and the first mounting portion 1321 is configured to fix the pressure sensor 131. Specifically, as shown in FIG. 7, the first mounting portion 1321 may be formed with an opening 1323, so that at least a portion of the pressure sensor 131 is disposed within the opening 1323. The first mounting portion 1321 is arranged around the pressure sensor 131 to fix the pressure sensor 131, reducing the impact on the measurement region of the pressure sensor 131, improving structural stability, reducing the tilting likelihood of the pressure sensor 131, and enhancing measurement accuracy.

In some embodiments, the fixing component 132 may further be configured to fix other components. For example, the pressure measurement mechanism 13 can be fixedly connected to other components through the fixing component 132, and the embodiments of the present application are not limited thereto.

For example, the fixing component 132 further includes two second mounting portions 1322 arranged oppositely and spaced apart, the two second mounting portions 1322 are located on a side of the first mounting portion 1321 close to the first guide rail mechanism 11, a portion of the first guide rail mechanism 11 is disposed between the two second mounting portions 1322, and the two second mounting portions 1322 are configured to fix the first guide rail mechanism 11. Considering that the weight of the pressure sensor 131 is relatively small while the weight of the first guide rail mechanism 11 is relatively large, fixing the pressure sensor 131 through the first mounting portion 1321 of the fixing component 132 and fixing the first guide rail mechanism 11 through the second mounting portions 1322, with the first mounting portion 1321 and the second mounting portion 1322 arranged in a stacked manner, can enhance the overall structural strength of the fixing component 132, improve structural stability, and thus improve the measurement accuracy of the pressure sensor 131.

Specifically, the fixing component 132 may include two second mounting portions 1322 arranged oppositely and spaced apart, with a portion of the first guide rail mechanism 11 disposed between the two second mounting portions 1322. For example, the first guide rail mechanism 11 may include a third mounting portion 111, and the third mounting portion 111 is disposed between the two second mounting portions 1322 to clamp the third mounting portion 111, allowing the first guide rail mechanism 11 to be stably disposed on the fixing component 132.

In the embodiments of the present application, the pressure measurement mechanism 13 further includes: a support component 133 located on a side of the pressure sensor 131 away from the first guide rail mechanism 11, where the support component 133 is configured to support the pressure sensor 131. The support component 133 is located on the back of the measurement region of the pressure sensor 131 to support the pressure sensor 131, so that that the pressure sensor 131 is not suspended, ensuring close contact between the measurement region of the pressure sensor 131 and the components it supports above, thereby improving the measurement accuracy of the pressure sensor 131.

In some embodiments, the support component 133 is fixed to a side of the fixing component 132 away from the first guide rail mechanism 11. The side of the fixing component 132 away from the first guide rail mechanism 11 may include the first mounting portion 1321 of the fixing component 132, and the support component 133 can be fixed to the first mounting portion 1321 to facilitate proximity and support for the pressure sensor 131 fixed to the first mounting portion 1321. Additionally, considering that the fixing component 132 needs to support the total weight of the first guide rail mechanism 11 and the moving mechanism 12, to further improve structural stability, a support component 133 can be disposed below the fixing component 132, that is, on the side of the pressure sensor 131 away from the first guide rail mechanism 11, to further enhance structural stability.

In some embodiments, the fixing component 132 is provided with an opening 1323, and at least a partial region of the support component 133 is located within the opening 1323 to support the pressure sensor 131 through the opening 1323. By having at least a part of the fixing component 132 disposed within the opening 1323, at least a partial region of the pressure sensor 131 can also be located within the opening 1323. In this way, the partial region of the support component 133 located within the opening 1323 can directly come into contact with the pressure sensor 131 through the opening 1323, thereby better supporting the pressure sensor 131, ensuring close contact between the measurement region of the pressure sensor 131 and the components it supports above, and improving the measurement accuracy of the pressure sensor 131.

In some embodiments, the fixing component 132 includes a first mounting portion 1321 arranged around the pressure sensor 131, and the first mounting portion 1321 is configured to fix the pressure sensor 131. The first mounting portion 1321 is configured to form the opening 1323. The first mounting portion 1321 is arranged around the pressure sensor 131, allowing the opening 1323 to be formed through the first mounting portion 1321, resulting in a simple structure that is easy to implement.

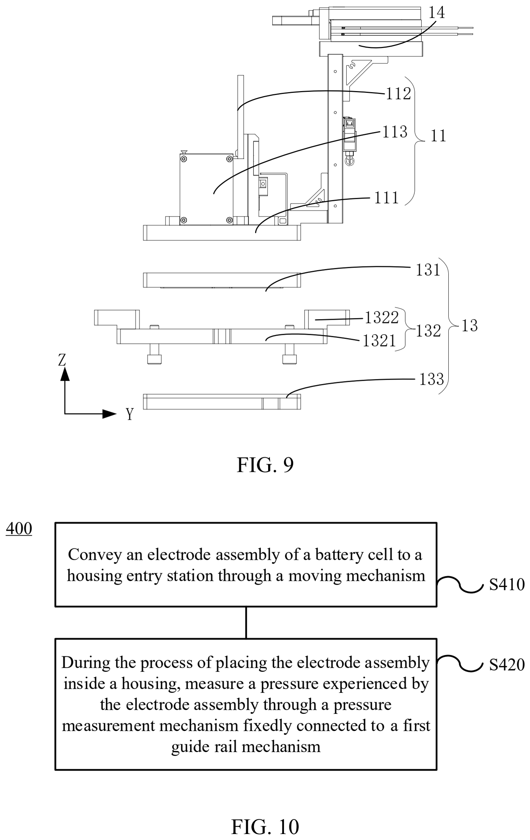

FIG. 8 and FIG. 9 show exploded schematic structural views of the first guide rail mechanism 11 and the pressure measurement mechanism 13 from different angles according to an embodiment of the present application. For example, the first guide rail mechanism 11 and the pressure measurement mechanism 13 shown in FIG. 8 and FIG. 9 may be the first guide rail mechanism 11 and the pressure measurement mechanism 13 included in the assembly apparatus 10 shown in FIG. 1 to FIG. 6. As shown in FIG. 8 and FIG. 9, the first guide rail mechanism 11 in the embodiments of the present application may include a third mounting portion 111, and the third mounting portion 111 is configured to fix the first guide rail mechanism 11 to the pressure measurement mechanism 13. For example, the third mounting portion 111 may be located in a region of the first guide rail mechanism 11 close to the pressure measurement mechanism 13. For another example, the third mounting portion 111 may be fixed to the fixing component 132 of the pressure measurement mechanism 13. For another example, the third mounting portion 111 may be located between two oppositely disposed and spaced-apart second mounting portions 1322 of the fixing component 132, with the two second mounting portions 1322 clamping the third mounting portion 111. For another example, the third mounting portion 11 may alternatively be fixed to the first mounting portion 1321, and the embodiments of the present application are not limited thereto.

As shown in FIG. 8 and FIG. 9, the first guide rail mechanism 11 in the embodiments of the present application may further include: a track 112 and a driving assembly 113, where the track 112 can be used for the moving mechanism 12 to move on the track 112, and the driving assembly 113 can be used to provide driving force for the track 112 or to control the movement path of the moving mechanism 12. Additionally, the type of the first guide rail mechanism 11 in the embodiments of the present application can be configured based on practical applications, with different types of guide rails corresponding to different types of tracks 112 and driving assemblies 113.

For example, the first guide rail mechanism 11 includes a magnetic drive guide rail. Specifically, for a magnetic drive guide rail, the track 112 of the first guide rail mechanism 11 may be a magnetic drive track, and the driving assembly 113 may include a magnetic drive stator, controlling the movement of the moving mechanism 12 along the track 112 through magnetic levitation. Using a magnetic drive guide rail allows the moving mechanism 12 to move faster and allows the moving mechanism 12 to move stably during movement, improving the processing efficiency of the battery cell 20.

In the embodiments of the present application, the assembly apparatus 10 further includes: a driving component 14, where the driving component 14 is configured to control the moving mechanism 12 to clamp and release the electrode assembly 22, and the driving component 14 is fixedly connected to the first guide rail mechanism 11. The driving component 14 is fixedly connected to the first guide rail mechanism 11 with no need to move synchronously with the moving mechanism 12, simplifying the structure of the moving mechanism 12 and further increasing the moving speed of the moving mechanism 12. Considering that at the housing entry station 100, during the process of placing the electrode assembly 22 inside the housing 211, the moving mechanism 12 needs to release the electrode assembly 22, the driving component 14 can control the moving mechanism 12 to release the electrode assembly 22. Additionally, after the electrode assembly 22 is placed inside the housing 211, the driving component 14 can further control the moving mechanism 12 to clamp the electrode assembly 22 sleeved with the housing 211, so that the moving mechanism 12 conveys the electrode assembly 22 sleeved with the housing 211 away from the housing entry station 100.

In some embodiments, the driving component 14 is also used to apply a driving force to the moving mechanism 12 along a third direction, allowing the moving mechanism 12 to release the electrode assembly 22 under the action of the driving force. Specifically, when the moving mechanism 12 needs to release the electrode assembly 22, for example, at the housing entry station 100, when the electrode assembly 22 needs to be placed inside the housing 211, the moving mechanism 12 needs to release the electrode assembly 22, and under the driving force applied by the driving component 14 along the third direction, the moving mechanism 12 can move along the second direction X to release the electrode assembly 22, facilitating the processing of the electrode assembly 22; similarly, when the electrode assembly 22 needs to be clamped, for example, after the electrode assembly 22 is placed inside the housing 211, the moving mechanism 12 needs to clamp the electrode assembly 22 to continue moving, and the driving force applied by the driving component 14 along the third direction allows the moving mechanism 12 to clamp the electrode assembly 22 to continue moving.

It should be understood that the driving component 14 in the embodiments of the present application applies a driving force along the third direction, where the third direction can be flexibly set based on practical applications. For example, the third direction may be the same as or different from the second direction X in which the moving mechanism 12 clamps the electrode assembly 22. For example, if the third direction is set to be different from the second direction X, the position of the driving component 14 can be more flexibly configured, reducing interference with the process of the driving component 14 clamping the electrode assembly 22. For example, in the embodiments of the present application, the second direction X is taken as the moving direction of the moving mechanism 12, and the third direction is set to be perpendicular to the second direction X, so the third direction may be the width direction Y of the assembly apparatus 10. The driving component 14 applies a driving force along the third direction Y, which can reduce interference with the process of the driving component 14 clamping the electrode assembly 22 and interference of the driving component 14 with the movement process of the moving mechanism 12, facilitating the disposition of the moving mechanism 12, but the embodiments of the present application are not limited thereto.

It should be understood that the driving component 14 in the embodiments of the present application can be implemented in various ways. For example, as shown in FIG. 8 to FIG. 9, the driving component 14 may be a cylinder, but the embodiments of the present application are not limited thereto.

In some embodiments, the first guide rail mechanism 11 includes a third mounting portion 111, the driving component 14 is fixedly connected to the third mounting portion 111, and the third mounting portion 111 is fixedly connected to the pressure measurement mechanism 13. Specifically, as shown in FIG. 8 and FIG. 9, the driving component 14 can be fixed to the third mounting portion 111, and through the fixation of the third mounting portion 111 to the pressure measurement mechanism 13, the driving component 14 can be indirectly fixedly connected to the pressure measurement mechanism 13. The pressure measurement component 13 can support the weight of the first guide rail mechanism 11. Specifically, the pressure measurement component 13 supports the weight of the driving component 14 fixedly connected to the first guide rail mechanism 11, simplifying the structure of the assembly apparatus 10 and accelerating the assembly efficiency of the battery cell 20.

In the embodiments of the present application, the assembly apparatus 10 includes a first guide rail mechanism 11, and the first guide rail mechanism 11 is located at the housing entry station 100, with a gap 110 between it and an adjacent second guide rail mechanism 31. This means that the first guide rail mechanism 11 at the housing entry station 100 is relatively independent. Thus, the pressure measurement mechanism 13 supports the weight of the first guide rail mechanism 11 of the housing entry station 100 and the weight of the moving mechanism 12 at the housing entry station 100 without being affected by adjacent stations, such as the second guide rail mechanism 31, resulting in more accurate measurement results.

The moving mechanism 12 in the embodiments of the present application conveys the electrode assembly 22 to the housing entry station 100. For example, the moving mechanism 12 can move along the first guide rail mechanism 11 and the second guide rail mechanism 31, passing through the first guide rail mechanism 11 at the housing entry station 100 to reach the housing entry station 100, and then at the housing entry station 100, the electrode assembly 22 is placed into the housing 211.

The pressure measurement mechanism 13 of the assembly apparatus 10 can support both the weights of the first guide rail mechanism 11 and the moving mechanism 12, so that when measuring the pressure experienced by the electrode assembly 22 during its entry into the housing 211, there is no need to separate the first guide rail mechanism 11, the moving mechanism 12, and the pressure measurement mechanism 13. This can simplify the assembly apparatus 10 and the process of measuring the pressure on the electrode assembly 22 when the electrode assembly 22 enters the housing 211, thereby improving the processing efficiency of the battery assembly 22 and the battery cell.

For example, the pressure measurement mechanism 13 in the embodiments of the present application may include: a pressure sensor 131 configured to measure the pressure experienced by the electrode assembly 22 during the process of placing the electrode assembly 22 inside the housing 211; and a fixing component 132 configured to fix the pressure sensor 131. The pressure sensor 131 can be specifically used to: reset the measurement value of the pressure measurement mechanism 13 to zero when the moving mechanism 12 conveys the electrode assembly 22 to the housing entry station 100 but has not placed the electrode assembly 22 inside the housing 211, and then measure the pressure experienced by the electrode assembly 22 during the process of placing the electrode assembly 22 inside the housing 211.

In the embodiments of the present application, the fixing component 132 includes a first mounting portion 1321 arranged around the pressure sensor 131, and the first mounting portion 1321 is configured to fix the pressure sensor 131. The fixing component 132 may further include two second mounting portions 1322 arranged oppositely and spaced apart, and the two second mounting portions 1322 are located on a side of the first mounting portion 1321 close to the first guide rail mechanism 11, with a portion of the first guide rail mechanism 11 disposed between the two second mounting portions 1322. The two second mounting portions 1322 are configured to fix the first guide rail mechanism 11.

The assembly apparatus 10 of the embodiments of the present application has been described in detail above with reference to the drawings, and the assembly method of the embodiments of the present application is described below, with details not described referring to the foregoing embodiments.

FIG. 10 shows a schematic flowchart of an assembly method 400 according to an embodiment of the present application, and the method 400 is used to assemble the battery cell 20 described above. As shown in FIG. 10, the method 400 may include: S410 of conveying an electrode assembly 22 of a battery cell 20 to a housing entry station 100 through a moving mechanism 12, where the housing entry station 100 is provided with a first guide rail mechanism 11, and a gap 110 is provided between the first guide rail mechanism 11 and an adjacent second guide rail mechanism 31; and S420 of during the process of placing the electrode assembly 22 inside a housing 211, measuring a pressure experienced by the electrode assembly 22 through a pressure measurement mechanism 13 fixedly connected to the first guide rail mechanism 11, where the pressure measurement mechanism 13 is configured to support weights of the first guide rail mechanism 11 and the moving mechanism 12 located on the first guide rail mechanism 11.

In some embodiments, the method 400 further includes: when the moving mechanism 12 conveys the electrode assembly 22 to the housing entry station 100 and the electrode assembly 22 has not been placed inside the housing 211, resetting the measurement value of the pressure measurement mechanism 13 to zero.

In some embodiments, the method 400 further includes: controlling the housing 211 to move along a first direction through a housing entry mechanism so that the electrode assembly 22 enters the housing 211 from an opening 2111 of the housing 211, the first direction is perpendicular to a surface of the pressure measurement mechanism 13 facing towards the electrode assembly 22.

It should be understood that the assembly method 400 of the embodiments of the present application can be used for the assembly apparatus 10 described above, and for brevity, details are not repeated here.

In the assembly method 400 of the embodiments of the present application, the moving mechanism 12 conveys the electrode assembly 22 to the housing entry station 100. For example, the moving mechanism 12 can move along the first guide rail mechanism 11 and the second guide rail mechanism 31, passing through the first guide rail mechanism 11 at the housing entry station 100 to reach the housing entry station 100, and then at the housing entry station 100, the electrode assembly 22 is placed into the housing 211. Since there is a gap 110 between the first guide rail mechanism 11 and the second guide rail mechanism 31, the first guide rail mechanism 11 at the housing entry station 100 is relatively independent, allowing the pressure measurement mechanism 13 to support the weight of the first guide rail mechanism 11 of the housing entry station 100 and the weight of the moving mechanism 12 at the housing entry station 100 without being affected by adjacent stations, such as, without being affected by the second guide rail mechanism 31, and resulting in more accurate measurement results. Additionally, when measuring the pressure experienced by the electrode assembly 22 during its entry into the housing 211, there is no need to separate the first guide rail mechanism 11, the moving mechanism 12, and the pressure measurement mechanism 13, simplifying the assembly apparatus 10 and the process of measuring the pressure on the electrode assembly 22 when the electrode assembly 22 enters the housing 211, thereby improving the processing efficiency of the battery assembly 22 and the battery cell.

Although the present application has been described with reference to preferred embodiments, various improvements can be made, and components therein can be replaced with equivalents without departing from the scope of the present application. In particular, as long as there is no structural conflict, the technical features mentioned in the various embodiments can be combined in any manner. The present application is not limited to the specific embodiments disclosed herein but includes all technical solutions falling within the scope of the claims.

## Claims

1. An assembly apparatus, configured to assemble a battery cell (20), **characterized in that** the assembly apparatus comprises:
a first guide rail mechanism (11), wherein the first guide rail mechanism (11) is located at a housing entry station (100), and a gap (110) is provided between the first guide rail mechanism (11) and an adjacent second guide rail mechanism (31);
a moving mechanism (12) configured to convey an electrode assembly (22) of the battery cell (20) to the housing entry station (100); and
a pressure measurement mechanism (13) fixedly connected to the first guide rail mechanism (11), wherein the pressure measurement mechanism (13) is configured to support weights of the first guide rail mechanism (11) and the moving mechanism (12) located on the first guide rail mechanism (11), and measure a pressure experienced by the electrode assembly (22) during the process of placing the electrode assembly (22) inside a housing (211).

2. The assembly apparatus according to claim 1, **characterized in that** the pressure measurement mechanism (13) comprises:
a pressure sensor (131) configured to measure the pressure experienced by the electrode assembly (22) during the process of placing the electrode assembly (22) inside the housing (211); and
a fixing component (132) configured to fix the pressure sensor (131).

3. The assembly apparatus according to claim 2, **characterized in that** the fixing component (132) comprises a first mounting portion (1321) arranged around the pressure sensor (131), and the first mounting portion (1321) is configured to fix the pressure sensor (131).

4. The assembly apparatus according to claim 3, **characterized in that** the fixing component (132) further comprises two second mounting portions (1322) arranged oppositely and spaced apart, the two second mounting portions (1322) are located on a side of the first mounting portion (1321) close to the first guide rail mechanism (11), a portion of the first guide rail mechanism (11) is disposed between the two second mounting portions (1322), and the two second mounting portions (1322) are configured to fix the first guide rail mechanism (11).

5. The assembly apparatus according to any one of claims 2 to 4, **characterized in that** the pressure measurement mechanism (13) further comprises:
a support component (133) located on a side of the pressure sensor (131) away from the first guide rail mechanism (11), wherein the support component (133) is configured to support the pressure sensor (131).

6. The assembly apparatus according to claim 5, **characterized in that** the support component (133) is fixed to a side of the fixing component (132) away from the first guide rail mechanism (11).

7. The assembly apparatus according to claim 5 or 6, **characterized in that** the fixing component (132) is provided with an opening (1323), and at least a partial region of the support component (133) is located within the opening (1323) to support the pressure sensor (131) through the opening (1323).

8. The assembly apparatus according to claim 7, **characterized in that** the fixing component (132) comprises a first mounting portion (1321) arranged around the pressure sensor (131), the first mounting portion (1321) is configured to fix the pressure sensor (131), and the first mounting portion (1321) is configured to form the opening (1323).

9. The assembly apparatus according to any one of claims 1 to 8, **characterized in that** a side of the moving mechanism (12) away from the first guide rail mechanism (11) is provided with a bearing surface (121), the electrode assembly (22) is connected to an end cap (212), one side of the end cap (212) is attached to the bearing surface (121), and the other side of the end cap (212) is attached to an end face of the electrode assembly (22).

10. The assembly apparatus according to claim 9, **characterized in that** the end cap (212) and the electrode assembly (22) are stacked along a first direction on the bearing surface (121), the moving mechanism (12) clamps the electrode assembly (22) along a second direction, and the second direction is perpendicular to the first direction.

11. The assembly apparatus according to any one of claims 1 to 10, **characterized in that** the assembly apparatus further comprises:
a driving component (14), wherein the driving component (14) is configured to control the moving mechanism (12) to clamp and release the electrode assembly (22), and the driving component (14) is fixedly connected to the first guide rail mechanism (11).

12. The assembly apparatus according to claim 11, **characterized in that** the first guide rail mechanism (11) comprises a third mounting portion (111), the driving component (14) is fixedly connected to the third mounting portion (111), and the third mounting portion (111) is fixedly connected to the pressure measurement mechanism (13).

13. The assembly apparatus according to any one of claims 1 to 12, **characterized in that** the first guide rail mechanism (11) comprises a magnetic drive guide rail.

14. The assembly apparatus according to any one of claims 1 to 13, **characterized in that** the assembly apparatus further comprises:
a housing entry mechanism (15), configured to control the housing (211) to move along a first direction so that the electrode assembly (22) enters the housing (211) from an opening (2111) of the housing (211), wherein the first direction is perpendicular to a surface of the pressure measurement mechanism (13) facing towards the electrode assembly (22).

15. An assembly method, **characterized by** comprising:
conveying an electrode assembly (22) of a battery cell (20) to a housing entry station (100) through a moving mechanism (12), wherein the housing entry station (100) is provided with a first guide rail mechanism (11), and a gap (110) is provided between the first guide rail mechanism (11) and an adjacent second guide rail mechanism (31); and
during the process of placing the electrode assembly (22) inside a housing (211), measuring a pressure experienced by the electrode assembly (22) through a pressure measurement mechanism (13) fixedly connected to the first guide rail mechanism (11), wherein the pressure measurement mechanism (13) is configured to support weights of the first guide rail mechanism (11) and the moving mechanism (12) located on the first guide rail mechanism (11).

16. The assembly method according to claim 15, **characterized in that** the method further comprises:
when the moving mechanism (12) conveys the electrode assembly (22) to the housing entry station (100) but has not placed the electrode assembly (22) inside the housing (211), resetting a measurement value of the pressure measurement mechanism (13) to zero.

17. The assembly method according to claim 15 or 16, **characterized in that** the method further comprises:
controlling the housing (211) to move along a first direction through a housing entry mechanism so that the electrode assembly (22) enters the housing (211) from an opening (2111) of the housing (211), wherein the first direction is perpendicular to a surface of the pressure measurement mechanism (13) facing towards the electrode assembly (22).
